# FASCICULE DE BREVET EUROPEEN

(11) **EP 3 263 453 B1**
(45) Date de publication et mention de la délivrance du brevet: **28.11.2018**
(21) Numéro de dépôt: 17174313.1
(22) Date de dépôt: 02.06.2017
(51) Int. Cl.: B64C 27/51

(54) **ROTOR ET AERONEF POURVU D'UN TEL ROTOR**
ROTOR UND MIT EINEM SOLCHEN ROTOR AUSGESTATTETES LUFTFAHRZEUG
A ROTOR AND AN AIRCRAFT PROVIDED WITH SUCH A ROTOR

(30) Priorité: 29.06.2016 FR 1601027
(43) Date de publication de la demande: 03.01.2018
(73) Titulaire: Airbus Helicopters, 13725 Marignane Cedex (FR)
(72) Inventeur: HONNORAT, Olivier, 13290 AIX EN PROVENCE (FR); JALAGUIER, Jean-Pierre, 13127 VITROLLES (FR)
(74) Mandataire: GPI & Associés

(56) Documents cités:
- DE-A1- 1 456 105
- FR-A1- 2 760 425
- FR-A1- 3 020 341
- GB-A- 787 848

## Description

La présente invention concerne un rotor et un aéronef muni d'un tel rotor.

L'invention se situe donc dans le domaine technique des rotors d'aéronef, et en particulier des rotors participant à la sustentation et/ou à la propulsion de l'aéronef.

En particulier, un hélicoptère comporte au moins un rotor participant à la sustentation voire à la propulsion de l'aéronef.

Ce rotor comporte un moyeu mis en rotation par une installation motrice. De plus, le rotor comporte une pluralité d'ensembles sustentateurs chacun entraîné en rotation par le moyeu.

Chaque ensemble sustentateur est fixé au moyeu par un organe de mobilité et de retenue. Un tel organe de mobilité et de retenue peut conférer une liberté de mouvement à un ensemble sustentateur, par rapport au moyeu, en rotation autour d'un axe de battement, et d'un axe de traînée et d'un axe de pas. Par exemple, un organe de mobilité et de retenue peut prendre la forme d'une butée sphérique, ou d'une lame flexible.

Par ailleurs, un ensemble sustentateur comporte un organe sustentateur et un pied relié au moyeu.

Le pied d'un ensemble sustentateur est un organe de liaison permettant de lier l'ensemble sustentateur à un organe de mobilité de retenue du rotor. Le pied peut prendre la forme d'une pièce mécanique indépendante de l'organe sustentateur, ou d'une pièce mécanique représentant une partie de l'organe sustentateur. Par exemple, le pied d'un ensemble sustentateur peut prendre la forme d'un manchon fixé à l'organe sustentateur, ou d'un manchon faisant partie intégrante de l'organe sustentateur.

Le terme « pale » désigne parfois l'ensemble sustentateur lorsque le pied est une partie intégrante de l'organe sustentateur, ou peut désigner l'organe sustentateur lorsque le pied n'appartient pas à l'organe sustentateur.

Par ailleurs, un rotor peut comporter des butées pour par exemple limiter un mouvement de battement vers le sol d'un ensemble sustentateur lorsque l'aéronef est à l'arrêt au sol, ou encore des butées pour limiter le battement vers le haut d'un ensemble sustentateur en vol.

De plus, un rotor peut comporter des amortisseurs.

Le document FR 2.630.703 décrit un rotor muni d'une pluralité d'ensembles sustentateurs reliés à un moyeu.

De plus, chaque ensemble sustentateur est relié à un ensemble sustentateur adjacent par un amortisseur. Un tel amortisseur est dénommé pour cette raison « amortisseur interpales ».

Chaque ensemble sustentateur est donc articulé à deux amortisseurs qui sont respectivement reliés à deux ensembles sustentateurs adjacents.

Les deux amortisseurs d'un même ensemble sustentateur sont fixés à cet ensemble sustentateur respectivement au niveau de deux axes de fixation. Ces deux axes de fixation sont positionnés sur l'axe de pas de l'ensemble sustentateur. En outre, ces deux axes de fixation sont séparés tous deux de l'axe de rotation du rotor par un plan géométrique, le plan géométrique contenant l'axe de traînée de l'ensemble sustentateur et étant orthogonal à l'axe de pas de cet ensemble sustentateur.

En outre, le rotor est muni de dispositifs de butées en traînée pour limiter un mouvement collectif en traînée des pales.

Par exemple, lorsque la rotation du rotor est freinée, les ensembles sustentateurs effectuent tous un mouvement en traînée selon le sens de rotation du rotor. Ces mouvements en traînée sont limités par le dispositif de butées en traînée.

Un rotor muni d'amortisseurs s'étendant entre deux ensembles sustentateurs s'avère notamment avantageux lorsque les ensembles sustentateurs effectuent tous un même mouvement de battement. Si des ensembles sustentateurs effectuent des mouvements en battement qui diffèrent, par exemple lors d'un phénomène de résonance air, les amortisseurs sont sollicités en étant rétractés ou étirés.

Par contre, cette architecture induit la présence de butées de traînée pour limiter un mouvement collectif des ensembles sustentateurs en traînée.

Le document FR 2.671.049 décrit un rotor muni d'une pluralité d'ensembles sustentateurs et d'amortisseurs interpales.

Chaque ensemble sustentateur comporte un pied muni d'une boucle enserrant un organe de mobilité et de retenue de type butée sphérique.

De plus, chaque ensemble sustentateur comporte un organe mécanique muni de deux plaques parallèles l'une à l'autre. Deux amortisseurs d'un ensemble sustentateurs sont fixés à ces plaques.

Le document US 2014/299.709 décrit un rotor muni d'un moyeu et d'ensembles sustentateurs. Chaque ensemble sustentateur est articulé à un amortisseur, cet amortisseur étant de plus articulé au moyeu et non pas à un autre ensemble sustentateur.

De tels amortisseurs sont parfois qualifiés « d'amortisseur pale-moyeu ».

Un rotor muni d'amortisseurs pale-moyeu peut éventuellement être dépourvu de butées de traînée. Par contre, contrairement à un rotor muni d'amortisseurs interpales, les amortisseurs sont toujours sollicités quand un ensemble sustentateur effectue un mouvement en battement.

En outre, un rotor muni d'amortisseurs pale-moyeu nécessite de mettre en place des systèmes de fixation sur le moyeu pour articuler les amortisseurs au moyeu. De tels systèmes de fixation s'avèrent souvent difficiles à intégrer, complexes et onéreux.

Le document FR 2760425 décrit un moyeu et une tête de rotor pour un aéronef à voilure tournante, ledit moyeu comprenant un plateau supérieur et un plateau inférieur formant deux pièces distinctes assemblées l'une à l'autre avec interposition des armatures externes desdites butées sphériques, de sorte que lesdits plateaux sont espacés l'un de l'autre et délimitent entre eux un espace dans lequel sont logées lesdites butées sphériques, lesdites armatures externes étant disposées à la périphérie desdits plateaux et étant traversées par des moyens de fixation solidarisant entre eux lesdits plateaux et lesdites butées sphériques. Les documents FR 3020341, GB 787848 et DE 1456105 sont aussi connus.

La présente invention a alors pour objet de proposer un rotor innovant, tendant éventuellement à présenter une masse et un encombrement optimisés.

L'invention vise ainsi un rotor destiné à participer au moins partiellement à la sustentation et/ou à la propulsion d'un aéronef, le rotor comprenant un moyeu et une pluralité d'ensembles sustentateurs mobiles conjointement en rotation autour d'un axe de rotation du rotor, chaque ensemble sustentateur comprenant un pied et un organe sustentateur qui s'étend en envergure du pied vers une extrémité, le pied étant attaché au moyeu par un organe de mobilité et de retenue et étant solidarisé à l'organe sustentateur, chaque organe de mobilité et de retenue conférant un degré de liberté par rapport au moyeu à l'ensemble sustentateur associé autour au moins d'un axe de traînée et d'un axe de pas, chaque ensemble sustentateur étant circonférentiellement positionné entre deux ensembles sustentateurs adjacents, chaque ensemble sustentateur étant relié aux deux ensembles sustentateurs adjacents respectivement par un premier amortisseur et un deuxième amortisseur.

Pour chaque ensemble sustentateur :
- un premier plan contient l'axe de traînée de cet ensemble sustentateur et est orthogonal à l'axe de pas de cet ensemble sustentateur,
- le premier amortisseur est articulé à cet ensemble sustentateur au moins autour d'un premier axe parallèle à l'axe de traînée de cet ensemble sustentateur,
- le deuxième amortisseur est articulé à cet ensemble sustentateur au moins autour d'un deuxième axe parallèle à l'axe de traînée de cet ensemble sustentateur, le premier axe étant situé dans un volume compris entre le premier plan et l'axe de rotation du rotor, le deuxième axe étant positionné en dehors dudit volume.

L'expression « mobiles conjointement en rotation » signifie que les ensembles sustentateurs et le moyeu effectuent conjointement un mouvement rotatif autour de l'axe de rotation du rotor lorsque ce rotor est entraîné en rotation.

L'expression « étant circonférentiellement positionné » signifie que chaque ensemble sustentateur est précédé d'un ensemble sustentateur amont et suivi d'un ensemble sustentateur aval au regard du sens de rotation du rotor autour de l'axe de rotation.

L'expression « organe sustentateur » désigne une portion de l'ensemble sustentateur présentant des profils aérodynamiques.

Ce rotor est pourvu d'amortisseurs pour notamment amortir des mouvements en trainée des ensembles sustentateurs. Ces amortisseurs sont du type amortisseur interpales, en reliant chacun deux ensembles sustentateurs adjacents l'un à l'autre.

Au regard d'un ensemble sustentateur donné, l'expression « premier amortisseur » désigne l'amortisseur articulé à cet ensemble sustentateur donné autour du premier axe correspondant. De même, l'expression « deuxième amortisseur » désigne l'amortisseur articulé à cet ensemble sustentateur donné autour du deuxième axe correspondant.

En outre, chaque amortisseur est articulé autour d'un dit premier axe à un ensemble sustentateur, et autour d'un dit deuxième axe à un autre ensemble sustentateur.

Avec des architectures connues, des butées doivent être implémentées pour limiter un mouvement en traînée collectif des ensembles sustentateurs, à savoir lorsque tous les ensembles sustentateurs effectuent sensiblement en même temps le même mouvement en traînée.

A contrario, l'invention peut rendre inutile un tel dispositif de butée en traînée.

A cet effet, les deux amortisseurs reliés à un ensemble sustentateur sont articulés à cet ensemble sustentateur par des articulations. Ces articulations confèrent au moins un degré de liberté en rotation aux deux amortisseurs respectivement autour d'un premier axe et un deuxième axe parallèles tous deux à l'axe de traînée de l'ensemble sustentateur.

En décalant, selon l'envergure de l'ensemble sustentateur, le premier axe et le deuxième axe de l'ensemble sustentateur de part et d'autre du premier plan contenant l'axe de traînée de l'ensemble sustentateur, l'invention permet de garantir qu'un mouvement en traînée d'un ensemble sustentateur induit la compression ou l'extension des amortisseurs.

En effet, lors d'une rotation d'un ensemble sustentateur autour de son axe de traînée, un desdits premier axe et deuxième axe de cet ensemble sustentateur peut tendre à se rapprocher de l'axe de rotation du rotor, et l'autre axe peut tendre à s'en éloigner. Dès lors, le positionnement particulier du premier et du deuxième axe tend à induire la sollicitation des amortisseurs, même lorsque les ensembles sustentateurs effectuent un mouvement respectif de rotation commun autour de leurs axes de rotation en traînée respectifs.

Avec ce montage, tout déplacement en traînée d'un ensemble sustentateur donné s'accompagne d'un effort de traction ou de compression exercé sur les amortisseurs articulés à cet ensemble sustentateur donné, ce qui permet de bloquer le mouvement de traînée des ensembles sustentateurs notamment lors du freinage du rotor. A titre d'exemple, un déplacement angulaire de 5° d'un ensemble sustentateur autour de son axe de traînée peut générer un effort statique dans les amortisseurs de 700 daN (décaNewtons), suffisant pour stopper le mouvement en traînée de l'ensemble sustentateur lors de l'arrêt du rotor.

Par suite, les amortisseurs peuvent être dimensionnés pour permettre de limiter le mouvement en trainée des ensembles sustentateurs. Ces amortisseurs peuvent rendre ainsi inutile un dispositif de butée en traînée. Dès lors, le rotor selon l'invention peut tendre à présenter les avantages d'un rotor muni d'amortisseurs interpales, sans en présenter les inconvénients usuels.

De plus, le rotor est pourvu d'amortisseurs interpales, et est donc dépourvu des attaches permettant selon l'état de l'art de fixer un amortisseur à un moyeu dans le cadre d'amortisseurs pale-moyeu. Le rotor peut alors être simplifié par rapport à un rotor pale-moyeu usuel, tout en présentant les avantages d'un tel rotor.

L'invention peut ainsi conduire à minimiser le nombre de pièces de ce rotor afin de limiter le coût et la masse du rotor, en évitant par exemple l'utilisation desdites attaches ou d'un dispositif de butée en traînée.

L'invention peut en outre conduire à un rotor présentant un encombrement minimum. Le moyeu peut notamment être très compact. Un tel moyeu peut être caréné plus efficacement et à moindre masse à l'aide d'une coupole.

En outre, un rotor muni d'un moyeu compact peut permettre d'utiliser des ensembles sustentateurs ayant des profils aérodynamiques radialement à proximité du moyeu.

Sur un hélicoptère, des phénomènes de recirculation des gaz d'échappement d'un moteur peuvent générer des pertes de puissance pénalisantes pour les performances du moteur, notamment lors d'une phase de vol en stationnaire. Ces phénomènes de recirculation sont parfois provoqués par la quasi-absence de mouvement d'air au niveau du moyeu durant cette phase de vol. Dès lors, les gaz d'échappement peuvent être en partie ré-aspiré par le moteur. En utilisant un rotor compact, la zone profilée des ensembles sustentateurs est proche de l'axe de rotation du rotor et peut donc tendre à induire un mouvement d'air à proximité de cet axe de rotation pour limiter ledit phénomène de recirculation.

Le rotor selon l'invention peut de plus comporter une ou plusieurs des caractéristiques qui suivent.

Ainsi, le premier axe et le deuxième axe d'un ensemble sustentateur peuvent être disposés de part et d'autre de l'axe de pas de cet ensemble sustentateur.

Cet agencement peut favoriser le fonctionnement du système.

Selon un autre aspect, ledit premier axe peut être situé du côté du bord d'attaque de l'ensemble sustentateur, le deuxième axe étant situé du côté du bord de fuite de l'ensemble sustentateur.

Selon un autre aspect, le premier axe et le deuxième axe d'un ensemble sustentateur peuvent être respectivement séparés de l'axe de rotation du rotor par un premier rayon et un deuxième rayon, le deuxième rayon étant supérieur au premier rayon.

Selon un autre aspect, chaque amortisseur peut s'étendre d'une première zone extrémale vers une deuxième zone extrémale le long d'un axe longitudinal d'extension, la première zone extrémale étant articulée à un ensemble sustentateur dit « premier ensemble sustentateur » autour du premier axe de ce premier ensemble sustentateur, la deuxième zone extrémale étant articulée à un ensemble sustentateur dit « deuxième ensemble sustentateur » autour du deuxième axe de ce deuxième ensemble sustentateur, une première distance séparant orthogonalement ledit axe longitudinal d'extension et un axe de traînée dit « premier axe de traînée » du premier ensemble sustentateur, une deuxième distance séparant orthogonalement ledit axe longitudinal d'extension et un axe de traînée dit « deuxième axe de traînée » du deuxième ensemble sustentateur, un quotient de la première distance divisée par la deuxième distance est inférieur ou égal à 0,6.

La distance la plus faible doit donc être comprise entre 0 et au maximum 0.6 fois la distance la plus grande.

Par cette disposition, en cas de mouvement synchrone des ensembles sustentateurs, les deux points d'attache d'un amortisseur à deux ensembles sustentateurs se rapprochent ou s'éloignent selon le sens de rotation des ensembles sustentateurs. Les amortisseurs sont donc sollicités et cette sollicitation peut être suffisante pour supprimer toute butée de trainée.

Selon un autre aspect, pour chaque ensemble sustentateur, le premier amortisseur relié à cet ensemble sustentateur s'étend selon un axe longitudinal d'extension dit « premier axe longitudinal d'extension » et le deuxième amortisseur s'étend selon un axe longitudinal d'extension dit « deuxième axe longitudinal d'extension », le premier axe longitudinal d'extension coupant un deuxième plan en un premier point, le deuxième axe longitudinal d'extension coupant le deuxième plan en un deuxième point, le deuxième plan contenant ledit axe de pas de cet ensemble sustentateur et étant orthogonal au premier plan de cet ensemble sustentateur, le premier point étant plus proche de l'axe de rotation que le deuxième point.

Selon un autre aspect, le rotor peut être dépourvu de butée pour limiter un mouvement en traînée des ensembles sustentateurs.

Selon un autre aspect, au moins un amortisseur peut être articulé à un ensemble sustentateur par une articulation à rotule, cette articulation à rotule comprenant une bille traversée par une broche s'étendant selon le premier axe ou le deuxième axe.

Le terme « bille » désigne un organe pouvant être sphérique, ou partiellement sphérique par exemple en comprenant des zones aplaties.

Des broches peuvent alors s'étendre le long de tous les premier et deuxième axes.

Selon une autre variante, chaque broche est orthogonale à un premier axe ou un deuxième axe.

Indépendamment de la variante, une articulation à rotule confère une liberté de mouvement en rotation autour de trois axes de rotation, et non donc notamment du premier axe ou du deuxième axe précités

Par ailleurs, le pied d'un ensemble sustentateur peut comporter une anse fixée à un organe de mobilité et de retenue et une ferrure fixée à l'ensemble sustentateur entre ladite anse et ladite extrémité de l'ensemble sustentateur, ladite ferrure comprenant deux plaques en forme de L, chaque plaque en forme de L présentant un orifice traversé par ledit deuxième axe.

Par ailleurs, les deux plaques peuvent enserrer entre elles un organe intermédiaire de liaison, cet organe intermédiaire comprenant au moins un orifice traversé par le premier axe et une chape reliée à une bielle de pas.

Deux amortisseurs et une bielle de pas sont fixés à une même ferrure d'un ensemble sustentateur. De plus, les deux amortisseurs sont fixés transversalement, à savoir selon l'extension des cordes de l'ensemble sustentateur, de part et d'autre de l'ensemble sustentateur.

Ce montage avec accrochage des amortisseurs de part et d'autre de l'ensemble sustentateur permet de s'assurer que les efforts exercés sur les amortisseurs sont repris par la ferrure et ne sont pas transmis au moyeu.

De plus, les efforts de commande transmis par une bielle de pas transitent par la ferrure, et non pas par l'anse ce qui tend à faciliter le dimensionnement de cette anse.

Selon un autre aspect, la ferrure peut porter un talon de butée basse en regard d'un anneau de butée basse pour limiter un mouvement de battement de l'ensemble sustentateur selon une direction.

Cet anneau de butée peut être attaché à un mât rotor qui est solidaire du moyeu pour entraîner en rotation le rotor autour de l'axe de rotation par exemple. On peut se référer à la littérature pour obtenir des informations sur des anneaux de butée. En particulier l'enseignement du document FR 2671049 peut être appliqué. L'anneau de butée est alors porté par des étriers.

Un tel agencement permet d'obtenir une anse relativement compacte, et donc un rotor relativement compact.

A l'inverse, un agencement du talon de butée au niveau de l'anse induirait la transmission des moments de flexion exercés sur l'ensemble sustentateur à l'anse. L'anse est initialement dimensionnée pour supporter les efforts centrifuges exercés sur l'ensemble sustentateur. L'anse devrait alors être surdimensionnée pour résister à de tels moments dans la mesure où ces moments tendent à être plus pénalisant que les efforts centrifuges subis.

Selon un autre aspect, le moyeu peut comporter deux plateaux, le pied de chaque ensemble sustentateur comprenant une anse s'étendant partiellement entre lesdits plateaux, l'anse étant articulée aux deux plateaux par un organe de mobilité et de retenue.

Le moyeu est de type biplateau. Ce moyeu comporte donc deux plateaux, les anses des ensembles sustentateurs étant agencées entre les deux plateaux. Par exemple, les plateaux sont fixés l'un à l'autre par des systèmes usuels. De manière alternative, les plateaux peuvent être des parties d'une seule et même pièce mécanique.

Un tel moyeu peut tendre à optimiser le montage et le démontage des ensembles sustentateurs.

Pour chaque ensemble sustentateur, un organe de mobilité et de retenue peut être agencé entre les deux plateaux, l'organe de mobilité et de retenue comportant une armature externe fixée aux deux plateaux et une armature interne fixée à ladite anse, ladite armature interne étant radialement agencée entre ledit axe de rotation et ladite armature externe.

Chaque plateau peut par exemple avoir une forme de polygone, chaque armature externe étant localisée au niveau d'un sommet de ce polygone. Alternativement, chaque plateau peut par exemple avoir une forme d'étoile, chaque armature externe étant localisée au niveau d'une extrémité d'une branche de l'étoile.

Cet agencement tend à faciliter le montage et le démontage des éléments sustentateurs. Il suffit de démonter les armatures externes et une bielle de pas pour pouvoir démonter un ensemble sustentateur.

Outre un rotor, l'invention vise un aéronef comportant ce rotor.

Par exemple, l'aéronef est un giravion, et éventuellement un hélicoptère.

L'invention et ses avantages apparaîtront avec plus de détails dans le cadre de la description qui suit avec des exemples donnés à titre illustratif en référence aux figures annexées qui représentent :
- la figure 1, une vue d'un rotor d'un aéronef selon l'invention en trois dimensions,
- la figure 2, une coupe d'un amortisseur fixé à deux ensembles sustentateurs,
- la figure 3, un schéma d'une vue de dessus d'un rotor selon l'invention, et
- la figure 4, un schéma explicitant la sollicitation d'un amortisseur.

Les éléments présents dans plusieurs figures distinctes sont affectés d'une seule et même référence.

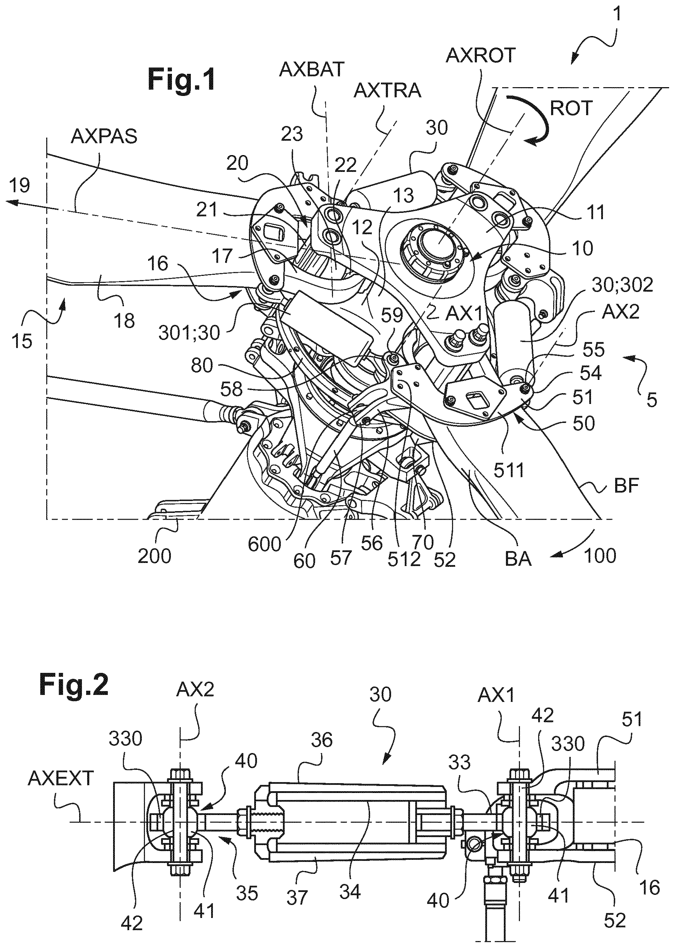

La figure 1 présente un rotor 5 d'un aéronef 1. Ce rotor 5 participe au moins partiellement à la sustentation ou à la propulsion de l'aéronef 1, voire à la sustentation et à la propulsion de l'aéronef 1.

Le rotor 5 est mis en mouvement par une chaîne de transmission de puissance 200. Une telle chaîne de transmission de puissance 200 comprend notamment un mât rotor solidaire en rotation du rotor 5 autour d'un axe dénommé « axe de rotation AXROT ».

Le rotor 5 comprend un moyeu 10 qui porte une pluralité d'ensembles sustentateurs 15, et par exemple au moins trois ensembles sustentateurs. Le moyeu et les ensembles sustentateurs effectuent donc conjointement une rotation autour de l'axe de rotation AXROT sous l'impulsion de la chaîne de transmission de puissance 200.

Le moyeu 10 peut comprendre deux plateaux 11, 12 parallèles l'un à l'autre et sensiblement orthogonaux à l'axe de rotation AXROT. Ces plateaux sont reliés l'un à l'autre par des organes usuels, tels qu'un arbre central 13. Un espace vide sépare en élévation les deux plateaux 11, 12. Chaque plateau peut présenter une forme de polygone ou encore une forme d'étoile par exemple.

Par ailleurs, chaque ensemble sustentateur 15 s'étend en envergure du moyeu 10 jusqu'à une extrémité 19 sensiblement radialement. En particulier, chaque ensemble sustentateur 15 comprend un pied 16 qui est attaché au moyeu 10 et un organe sustentateur 18. Cet organe sustentateur 18 s'étend du pied 16 jusqu'à l'extrémité 19.

Le pied 16 peut être fixé à l'organe sustentateur 15 par des moyens usuels, ou être une partie constitutive de cet organe sustentateur. En outre, le pied 16 peut comprendre une boucle dénommée « anse 17 ». L'anse 17 peut avoir une forme de C pour délimiter une lumière au sein du pied.

Dès lors, chaque ensemble sustentateur 15 est attaché au moyeu 10 par un organe de mobilité et de retenue 20. Un tel organe de mobilité et de retenue 20 confère un degré de liberté par rapport au moyeu à l'ensemble sustentateur fixé à cet organe de mobilité et de retenue 20, autour au moins d'un axe de traînée AXTRA et d'un axe de pas AXPAS voire d'un axe de battement AXBAT.

L'axe de pas AXPAS est sensiblement étendu selon l'envergure de l'ensemble sustentateur et orthogonal à l'axe de rotation AXROT. En outre, l'axe de traînée est sensiblement parallèle à l'axe de rotation AXROT. Enfin, l'axe de battement est sensiblement orthogonal à l'axe de traînée AXTRA et à l'axe de pas AXPAS.

Par exemple, chaque organe de mobilité et de retenue 20 est agencé entre les deux plateaux 11, 12.

Un organe de mobilité et de retenue 20 peut prendre la forme d'une butée sphérique. Dès lors, l'organe de mobilité et de retenue 20 est muni d'une armature externe 21 reliée à une armature interne 22 par une zone centrale 23. Une telle zone centrale 23 comporte par exemple un organe élastomérique qui est pourvu d'une alternance de couches souples en élastomère et de couches rigides éventuellement métalliques.

L'armature externe 21 est fixée aux deux plateaux 11, 12, en s'étendant en élévation d'un plateau dit « plateau inférieur 12 » vers un plateau dit « plateau supérieur 11 ». Par exemple, l'armature externe 21 est vissée à chaque plateau.

Par contre, l'armature interne 22 est fixée à ladite anse 17, et n'est pas fixée au moyeu. Par exemple, l'armature interne 22 est fixée, éventuellement par des vis, à un fond de l'anse.

L'armature interne 22 ainsi que l'armature externe 21 et la zone centrale 23 sont alors disposées partiellement dans la lumière délimitée par l'anse. De plus, l'armature interne 22 est radialement agencée entre l'axe de rotation AXROT et l'armature externe 21.

Par ailleurs, les ensembles sustentateurs 15 sont circonférentiellement répartis autour du moyeu 10. Les ensembles sustentateurs 15 sont par exemple circonférentiellement équirépartis autour du moyeu 10.

Dès lors, chaque ensemble sustentateur 15 est circonférentiellement agencé entre deux autres ensembles sustentateurs. Au regard du sens de rotation ROT du rotor, un ensemble sustentateur est disposé entre un ensemble sustentateur adjacent amont et un ensemble sustentateur adjacent aval.

Par ailleurs, le rotor 5 comporte une pluralité d'amortisseurs 30. En particulier, le rotor 5 comprend un amortisseur 30 par ensemble sustentateur 15.

Chaque amortisseur 30 s'étend entre deux ensembles sustentateurs adjacents.

Selon l'exemple de la figure 1, le rotor comporte trois ensembles sustentateurs. Dès lors, un amortisseur est articulé à un premier ensemble sustentateur et à un deuxième ensemble sustentateur, un autre amortisseur est articulé au deuxième ensemble sustentateur et à un troisième ensemble sustentateur, et un dernier amortisseur est articulé au troisième ensemble sustentateur et au premier ensemble sustentateur.

Chaque ensemble sustentateur 15 est donc articulé à un premier amortisseur 301 autour d'un premier axe AX1 et à un deuxième amortisseur 302 autour d'un deuxième axe AX2. Par conséquent, chaque amortisseur est articulé à un ensemble sustentateur autour du premier axe de cet ensemble sustentateur, et à un autre ensemble sustentateur autour du deuxième axe de cet autre ensemble sustentateur.

Le premier axe AX1 et le deuxième axe AX2 associés à un ensemble sustentateur sont parallèles à l'axe de traînée de cet ensemble sustentateur.

Le premier axe AX1 peut être situé du côté du bord d'attaque BA de l'ensemble sustentateur 15. Dès lors, le deuxième axe AX2 est situé du côté du bord de fuite BF de ce même ensemble sustentateur 15.

Pour être fixé à deux amortisseurs, chaque ensemble sustentateur 15 peut comprendre une ferrure 50.

La ferrure 50 d'un ensemble sustentateur permet d'articuler à cet ensemble sustentateur un premier amortisseur 301 autour d'un premier axe AX1 et un deuxième amortisseur 302 autour d'un deuxième AX2.

Par exemple, cette ferrure 50 comprend deux plaques 51, 52. Les deux plaques sont disposées en élévation de part et d'autre du pied 16 de l'ensemble sustentateur. De plus, les deux plaques sont agencées selon l'envergure de l'ensemble sustentateur entre l'anse 17 et l'extrémité 19 de cet ensemble sustentateur.

Les deux plaques 51, 52 peuvent avoir une forme de L, en présentant une grande branche 511 et une petite branche 512. La grande branche 511 s'étend sensiblement parallèlement à l'axe de battement de l'ensemble sustentateur, alors que la petite branche 512 s'étend sensiblement parallèlement à l'axe de pas de l'ensemble sustentateur.

Les deux plaques 51, 52 sont fixées à l'ensemble sustentateur par exemple par des moyens de vissage traversant l'épaisseur du pied.

Chaque plaque 51, 52 présente un orifice 55 traversé par le deuxième axe AX2. Cet orifice 55 peut être ménagé au niveau d'une extrémité libre de la grande branche 511. Les deux plaques forment alors conjointement une chape femelle apte à être articulée à un amortisseur.

Par ailleurs, les deux plaques 51, 52 peuvent être fixées par des moyens usuels, tels que des moyens de vissage, à un organe intermédiaire 56 de liaison. Par exemple, l'organe intermédiaire 56 est fixé à des extrémités libres de la petite branche 512 des plaques 51, 52.

Cet organe intermédiaire 56 peut comprendre une chape 57 reliée à une bielle de pas 60. Par exemple, cette chape est une première chape femelle 57 munie de deux joues articulées à une chape male 600 d'une bielle de pas 60.

De plus, cet organe intermédiaire 56 peut comprendre au moins un orifice 59 traversé par le premier axe AX1. Par exemple, l'organe intermédiaire comprend une deuxième chape femelle 58 munie deux joues. Les deux joues de la deuxième chape femelle sont munies chacune d'un tel orifice 59 et sont articulées à un amortisseur.

Selon un autre aspect, la ferrure 50 peut être fixée par des moyens usuels à un talon de butée basse 70.

Ce talon de butée basse s'étend en élévation dans la lumière délimitée par l'anse de l'ensemble sustentateur associé, en saillant en élévation hors de cette lumière. De plus, ce talon de butée basse est en regard d'un anneau de butée basse 80 pour limiter un mouvement de battement de l'ensemble sustentateur 15 selon une direction 100.

En référence à la figure 2, un amortisseur 30 peut être fixé à une ferrure par une articulation à rotule 40. Dès lors, une telle articulation à rotule 40 comprend une bille 41 et une broche 42 traversant la bille 41. La broche 42 est alors disposée le long d'un premier axe ou d'un deuxième axe en fonction de son emplacement. Chaque articulation à rotule confère à un amortisseur au moins un degré de liberté en rotation autour de l'axe le long duquel s'étend la broche de l'articulation à rotule.

Par exemple, l'amortisseur 30 s'étend longitudinalement le long d'un axe longitudinal d'extension AXEXT d'une première zone extrémale 33 à une deuxième zone extrémale 35. La première zone extrémale 33 comporte alors une cage 330 entourant partiellement une bille 41 traversée par une broche s'étendant selon le premier axe AX1. De même, la deuxième zone extrémale 35 comporte alors une cage entourant partiellement une bille 41 traversée par une broche s'étendant selon le deuxième axe AX2.

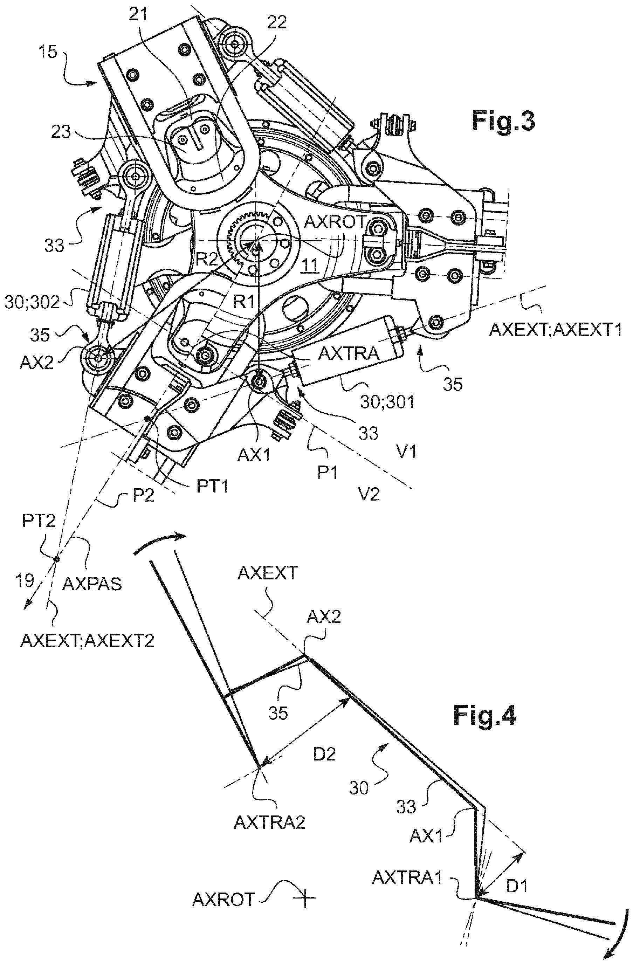

Par ailleurs, la première zone extrémale 33 peut être solidaire d'un premier organe mobile 34 de l'amortisseur 30, et la deuxième zone extrémale 35 peut être solidaire d'un deuxième organe mobile 36 de l'amortisseur 30. Par exemple, des éléments amortissants sont disposés entre le premier organe mobile 34 et le deuxième organe mobile 36. Selon la réalisation de la figure 3 chaque organe mobile peut prendre la forme d'une armature cylindrique, l'élément amortissant comprenant au moins un anneau en élastomère.

D'autres types d'amortisseurs sont néanmoins envisageables, tels que des amortisseurs hydrauliques par exemple.

Selon un autre aspect et en référence à la figure 3, pour chaque ensemble sustentateur, un premier plan P1 géométrique est orthogonal à l'axe de pas AXPAS de cet ensemble sustentateur et contient l'axe de traînée AXTRA de cet ensemble sustentateur.

Dès lors, ce premier plan P1 partage l'espace en deux volumes. Plus particulièrement, le premier plan P1 sépare un volume V1 dit « premier volume » contenant l'axe de rotation AXROT, d'un volume dit « deuxième volume V2 » contenant l'extrémité 19 de l'ensemble sustentateur.

Dès lors, le premier axe AX1 selon lequel un premier amortisseur 301 est fixé à l'ensemble sustentateur est situé dans le premier volume V1 contenant l'axe de rotation AXROT du rotor. Par contre, le deuxième axe AX2, selon lequel un deuxième amortisseur 302 est fixé à l'ensemble sustentateur, est situé dans le deuxième volume V2. Le deuxième axe AX2 est positionné entre le premier plan P1 et un plan parallèle au premier plan P1 et passant par l'extrémité 19 de l'ensemble sustentateur.

De plus, la figure 3 illustre le fait que le premier axe AX1 et le deuxième axe AX2 d'un ensemble sustentateur 15 sont respectivement séparés de l'axe de rotation AXROT par un premier rayon R1 et un deuxième rayon R2. Le deuxième rayon R2 est alors supérieur au premier rayon R1.

Par ailleurs, pour chaque ensemble sustentateur, le premier amortisseur 301 articulé à cet ensemble sustentateur autour d'un premier axe AX1 s'étend selon un axe longitudinal d'extension AXEXT dit « premier axe longitudinal d'extension AXEXT1 ». Le deuxième amortisseur 302 articulé à cet ensemble sustentateur autour d'un deuxième axe AX2 s'étend selon un axe longitudinal d'extension AXEXT dit « deuxième axe longitudinal d'extension AXEXT2 ».

Dès lors, le premier axe longitudinal d'extension AXEXT1 traverse un deuxième plan P2 en un premier point PT1, le deuxième plan P2 contenant l'axe de pas AXPAS et l'axe de traînée AXTRA de l'ensemble sustentateur observé et étant orthogonal au premier plan P1.

De même, le deuxième axe longitudinal d'extension AXEXT2 traverse le deuxième plan P2 en un deuxième point PT2.

Dès lors, le premier point PT1 est plus proche de l'axe de rotation AXROT que le deuxième point PT2.

En outre, le premier axe AX1 et le deuxième axe AX2 ne sont pas contenus dans le deuxième plan P2. Au contraire, le premier axe AX1 et le deuxième axe AX2 associés à un ensemble sustentateur 15 sont disposés de part et d'autre de l'axe de pas AXPAS de cet ensemble sustentateur 15.

Par ailleurs et en référence à la figure 4, chaque amortisseur 30 s'étend de fait entre une première zone extrémale articulée autour d'un premier axe AX1 d'un premier ensemble sustentateur et une deuxième zone extrémale articulée autour d'un deuxième axe AX2 d'un deuxième ensemble sustentateur.

Une première distance D1 sépare orthogonalement l'axe longitudinal d'extension AXEXT et un axe de traînée AXTRA dit « premier axe de traînée AXTRA1 » du premier ensemble sustentateur. Cette première distance D1 représente alors la plus petite distance séparant orthogonalement l'axe longitudinal d'extension AXEXT et le premier axe de traînée AXTRA1.

Une deuxième distance D2 sépare orthogonalement l'axe longitudinal d'extension AXEXT et un axe de traînée AXTRA dit « deuxième axe de traînée AXTRA2 » du deuxième ensemble sustentateur. Cette deuxième distance D2 représente alors la plus petite distance séparant orthogonalement l'axe longitudinal d'extension AXEXT et le deuxième axe de traînée AXTRA2.

Dès lors, un quotient de la première distance D1 divisée par la deuxième distance D2 est inférieur ou égal à 0,6.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor (5) destiné à participer au moins partiellement à la sustentation et/ou à la propulsion d'un aéronef (1), ledit rotor (5) comprenant un moyeu (10) et au moins trois d'ensembles sustentateurs (15) mobiles conjointement en rotation autour d'un axe de rotation (AXROT) du rotor (5), chaque ensemble sustentateur (15) comprenant un pied (16) et un organe sustentateur (18) qui s'étend en envergure dudit pied (16) vers une extrémité (19), le pied (16) étant attaché au moyeu (10) par un organe de mobilité et de retenue (20) et étant solidarisé à l'organe sustentateur (18), chaque organe de mobilité et de retenue (20) conférant un degré de liberté par rapport au moyeu à l'ensemble sustentateur associé autour au moins d'un axe de traînée (AXTRA) et d'un axe de pas (AXPAS), chaque ensemble sustentateur (15) étant circonférentiellement positionné entre deux ensembles sustentateurs adjacents, chaque ensemble sustentateur (15) étant relié audits deux ensembles sustentateurs adjacents respectivement par un premier amortisseur (301) et un deuxième amortisseur (302), et pour chaque ensemble sustentateur (15) :
- un premier plan (P1) contient ledit axe de traînée (AXTRA) et est orthogonal audit axe de pas (AXPAS) de l'ensemble sustentateur (15),
- ledit premier amortisseur (301) est articulé audit ensemble sustentateur (15) au moins autour d'un premier axe (AX1) parallèle à l'axe de traînée (AXTRA) de l'ensemble sustentateur (15),
- ledit deuxième amortisseur (302) est articulé audit ensemble sustentateur (15) au moins autour d'un deuxième axe (AX2) parallèle à l'axe de traînée (AXTRA) de l'ensemble sustentateur (15),
**caractérisé en ce que** pour chaque ensemble sustentateur (15), le premier axe (AX1) est situé dans un volume (V1) compris entre ledit premier plan (P1) de cet ensemble sustentateur et ledit axe de rotation (AXROT), le deuxième axe (AX2) étant positionné en dehors dudit volume (V1).

2. Rotor selon la revendication 1,
**caractérisé en ce que** ledit premier axe (AX1) et ledit deuxième axe (AX2) d'un ensemble sustentateur (15) sont disposés de part et d'autre de l'axe de pas (AXPAS) de cet ensemble sustentateur (15).

3. Rotor selon l'une quelconque des revendications 1 à 2,
**caractérisé en ce que** ledit premier axe (AX1) et ledit deuxième axe (AX2) d'un ensemble sustentateur (15) sont respectivement séparés dudit axe de rotation (AXROT) par un premier rayon (R1) et un deuxième rayon (R2), le deuxième rayon (R2) étant supérieur au premier rayon (R1).

4. Rotor selon l'une quelconque des revendications 1 à 3,
**caractérisé en ce que** chaque amortisseur (30) s'étend d'une première zone extrémale (33) vers une deuxième zone extrémale (35) le long d'un axe longitudinal d'extension (AXEXT), la première zone extrémale (33) étant articulée à un ensemble sustentateur (15) dit « premier ensemble sustentateur » autour du premier axe (AX1) de ce premier ensemble sustentateur, la deuxième zone extrémale (35) étant articulée à un ensemble sustentateur (15) dit « deuxième ensemble sustentateur » autour du deuxième axe (AX2) de ce deuxième ensemble sustentateur, une première distance (D1) séparant orthogonalement ledit axe longitudinal d'extension (AXEXT) et un axe de traînée (AXTRA) dit « premier axe de traînée (AXTRA1) » du premier ensemble sustentateur, une deuxième distance (D2) séparant orthogonalement ledit axe longitudinal d'extension (AXEXT) et un axe de traînée (AXTRA) dit « deuxième axe de traînée (AXTRA2) » du deuxième ensemble sustentateur, un quotient de la première distance (D1) divisée par la deuxième distance (D2) est inférieur ou égal à 0,6.

5. Rotor selon l'une quelconque des revendications 1 à 4,
**caractérisé en ce que**, pour chaque ensemble sustentateur, le premier amortisseur (301) s'étend selon un axe longitudinal d'extension (AXEXT) dit « premier axe longitudinal d'extension (AXEXT1) » et le deuxième amortisseur (302) s'étend selon un axe longitudinal d'extension (AXEXT) dit « deuxième axe longitudinal d'extension (AXEXT2) », le premier axe longitudinal d'extension (AXEXT1) coupant un deuxième plan (P2) en un premier point (PT1), le deuxième axe longitudinal d'extension (AXEXT2) coupant le deuxième plan (P2) en un deuxième point (PT2), le deuxième plan (P2) contenant ledit axe de pas (AXPAS) et étant orthogonal au premier plan (P1), le premier point (PT1) étant plus proche de l'axe de rotation (AXROT) que le deuxième point (PT2).

6. Rotor selon l'une quelconque des revendications 1 à 5,
**caractérisé en ce que** ledit rotor (5) est dépourvu de butée pour limiter un mouvement en traînée des ensembles sustentateurs.

7. Rotor selon l'une quelconque des revendications 1 à 6,
**caractérisé en ce qu'**au moins un amortisseur (30) est articulé à un ensemble sustentateur (15) par une articulation à rotule (40), ladite articulation à rotule (40) comprenant une bille (41) traversée par une broche (42) s'étendant selon le premier axe (AX1) ou le deuxième axe (AX2).

8. Rotor selon l'une quelconque des revendications 1 à 7,
**caractérisé en ce que** le pied (16) comporte une anse (17) fixée à un organe de mobilité et de retenue (20) et une ferrure (50) fixée à l'ensemble sustentateur (15) entre ladite anse (17) et ladite extrémité (19), ladite ferrure (50) comprenant deux plaques (51, 52) en forme de L, chaque plaque (51, 52) en forme de L présentant un orifice (55) traversé par ledit deuxième axe (AX2).

9. Rotor selon la revendication 8,
**caractérisé en ce que** lesdites deux plaques (51, 52) enserrent entre elles un organe intermédiaire (56) de liaison, ledit organe intermédiaire (56) comprenant au moins un orifice (59) traversé par ledit premier axe (AX1), ledit organe intermédiaire (56) comprenant une chape (57) reliée à une bielle de pas (60).

10. Rotor selon l'une quelconque des revendications 8 à 9,
**caractérisé en ce que** ladite ferrure (50) porte un talon de butée basse (70) en regard d'un anneau de butée basse (80) pour limiter un mouvement de battement de l'ensemble sustentateur (15) selon une direction (100).

11. Rotor selon l'une quelconque des revendications 1 à 10,
**caractérisé en ce que** ledit premier axe (AX1) est situé du côté du bord d'attaque (BA) de l'ensemble sustentateur (15), ledit deuxième axe (AX2) étant situé du côté du bord de fuite (BF) de l'ensemble sustentateur (15).

12. Rotor selon l'une quelconque des revendications 1 à 11, **caractérisé en ce que** ledit moyeu (10) comporte deux plateaux (11, 12), ledit pied (16) de chaque ensemble sustentateur (15) comprenant une anse (17) s'étendant partiellement entre lesdits plateaux (11, 12), ladite anse (17) étant articulée aux deux plateaux (11, 12) par un dit organe de mobilité et de retenue (20).

13. Rotor selon la revendication 12,
**caractérisé en ce que** pour chaque ensemble sustentateur, un organe de mobilité et de retenue (20) est agencé entre les deux plateaux (11, 12), l'organe de mobilité et de retenue (20) comportant une armature externe (21) fixée aux deux plateaux (11, 12) et une armature interne (22) fixée à ladite anse (17), ladite armature interne (22) étant radialement agencée entre ledit axe de rotation (AXROT) et ladite armature externe (21).

14. Aéronef (1),
**caractérisé en ce que** ledit aéronef (1) comporte un rotor (5) selon l'une quelconque des revendications 1 à 13.

## Patentansprüche

1. Rotor (5), der dazu bestimmt ist, zumindest teilweise zum Auftrieb und/oder Antrieb eines Luftfahrzeugs (1) beizutragen, wobei der Rotor (5) eine Nabe (10) und mindestens drei Auftriebsbaugruppen (15) umfasst, die zusammen um eine Drehachse (AXROT) des Rotors (5) drehbeweglich sind, wobei jede Auftriebsbaugruppe (15) einen Fuß (16) und ein Auftriebselement (18) umfasst, das sich in einer Spannweitenrichtung von dem Fuß (16) zu einem Ende (19) erstreckt, wobei der Fuß (16) über ein Mobilitäts- und Rückhalteelement (20) an der Nabe (10) befestigt und mit dem Auftriebselement (18) verbunden ist, wobei jedes Mobilitäts- und Rückhalteelement (20) der zugehörigen Auftriebsbaugruppe einen Freiheitsgrad in Bezug auf die Nabe um mindestens eine Zugachse (AXTRA) und eine Steigungsachse (AXPAS) verleiht, wobei jede Auftriebsbaugruppe (15) in Umfangsrichtung zwischen zwei benachbarten Auftriebsbaugruppen positioniert ist, wobei jede Auftriebsbaugruppe (15) mit den beiden benachbarten Auftriebsbaugruppen jeweils durch einen ersten Dämpfer (301) und einen zweiten Dämpfer (302) verbunden ist, und für jede Auftriebsbaugruppe (15):
- eine erste Ebene (P1) die Zugachse (AXTRA) enthält und orthogonal zu der Steigungsachse (AXPAS) der Auftriebsbaugruppe (15) ist,
- der erste Dämpfer (301) an der Auftriebsbaugruppe (15) mindestens um eine zur Zugachse (AXTRA) der Auftriebsbaugruppe (15) parallele erste Achse (AX1) angelenkt ist,
- der zweite Dämpfer (302) an der Auftriebsbaugruppe (15) mindestens um eine zur Zugachse (AXTRA) der Auftriebsbaugruppe (15) parallele zweite Achse (AX2) angelenkt ist,
**dadurch gekennzeichnet, dass** für jede Auftriebsbaugruppe (15) die erste Achse (AX1) in einem Volumen (V1) zwischen der ersten Ebene (P1) dieser Auftriebsbaugruppe und der Drehachse (AXROT) angeordnet ist und die zweite Achse (AX2) außerhalb des Volumens (V1) positioniert ist.

2. Rotor nach Anspruch 1, **dadurch gekennzeichnet, dass** die erste Achse (AX1) und die zweite Achse (AX2) einer Auftriebsbaugruppe (15) auf beiden Seiten der Steigungsachse (AXPAS) dieser Auftriebsbaugruppe (15) angeordnet sind.

3. Rotor nach einem der Ansprüche 1 bis 2, **dadurch gekennzeichnet, dass** die erste Achse (AX1) und die zweite Achse (AX2) einer Auftriebsbaugruppe (15) jeweils durch einen ersten Radius (R1) und einen zweiten Radius (R2) von der Drehachse (AXROT) beabstandet sind, wobei der zweite Radius (R2) größer als der erste Radius (R1) ist.

4. Rotor nach einem der Ansprüche 1 bis 3, **dadurch gekennzeichnet, dass** sich jeder Dämpfer (30) von einer ersten Endzone (33) zu einer zweiten Endzone (35) entlang einer Längserstreckungsachse (AXEXT) erstreckt, wobei die erste Endzone (33) an eine als "erste Auftriebsbaugruppe" bezeichnete Auftriebsbaugruppe (15) um die erste Achse (AX1) dieser ersten Auftriebsbaugruppe angelenkt ist, wobei die zweite Endzone (35) an eine als "zweite Auftriebsbaugruppe" bezeichnete Auftriebsbaugruppe (15) um die zweite Achse (AX2) dieser zweiten Auftriebsbaugruppe angelenkt ist, wobei ein erster Abstand (D1) orthogonal die Längserstreckungsachse (AXEXT) und eine als "erste Zugachse (AXTRA1)" bezeichnete Zugachse (AXTRA) von der ersten Auftriebsbaugruppe trennt, ein zweiter Abstand (D2) die Längserstreckungsachse (AXEXT) und eine als "zweite Zugachse (AXTRA2)" bezeichnete Zugachse (AXTRA) orthogonal von der zweiten Auftriebsbaugruppe trennt, wobei ein Quotient aus dem ersten Abstand (D1) dividiert durch den zweiten Abstand (D2) kleiner oder gleich 0,6 ist.

5. Rotor nach einem der Ansprüche 1 bis 4, **dadurch gekennzeichnet, dass** sich für jede Auftriebsbaugruppe der erste Dämpfer (301) entlang einer als " erste Längserstreckungsachse (AXEXT1) " bezeichneten Längserstreckungsachse (AXEXT1) und der zweite Dämpfer (302) entlang einer als " zweite Längserstreckungsachse (AXEXT2) " bezeichneten Längserstreckungsachse (AXEXT) erstreckt,
die erste Längserstreckungsachse (AXEXT1) eine zweite Ebene (P2) an einem ersten Punkt (PT1) schneidet,
die zweite Längsstreckachse (AXEXT2) die zweite Ebene (P2) an einem zweiten Punkt (PT2) schneidet,
wobei die zweite Ebene (P2) die Steigungsachse (AXPAS) enthält und orthogonal zur ersten Ebene (P1) ist, wobei der erste Punkt (PT1) näher an der Drehachse (AXROT) liegt als der zweite Punkt (PT2).

6. Rotor nach einem der Ansprüche 1 bis 5, **dadurch gekennzeichnet, dass** der Rotor (5) frei von einem Anschlag zum Begrenzen der Zugbewegung der Auftriebsbaugruppen ist.

7. Rotor nach einem der Ansprüche 1 bis 6,
**dadurch gekennzeichnet, dass** mindestens ein Dämpfer (30) über ein Kugelgelenk (40) an einer Auftriebsbaugruppe (15) angelenkt ist, wobei das Kugelgelenk (40) eine Kugel (41) umfasst, die von einem Stift (42) durchquert wird, der sich entlang der ersten Achse (AX1) oder der zweiten Achse (AX2) erstreckt.

8. Rotor nach einem der Ansprüche 1 bis 7, **dadurch gekennzeichnet, dass** der Fuß (16) einen Henkel (17), der an einem Mobilitäts- und Halteelement (20) befestigt ist, und einen Beschlag (50) aufweist, der an der Auftriebsbaugruppe (15) zwischen dem Henkel (17) und dem Ende (19) befestigt ist, wobei der Beschlag (50) zwei L-förmige Platten (51, 52) umfasst, wobei jede L-förmige Platte (51, 52) eine Öffnung (55) aufweist, durch die die zweite Achse (AX2) verläuft.

9. Rotor nach Anspruch 8, **dadurch gekennzeichnet, dass** die beiden Platten (51, 52) zwischen sich ein Verbindungs-Zwischenelement (56) einspannen, wobei das Zwischenelement (56) mindestens eine Öffnung (59) umfasst, durch die die erste Achse (AX1) verläuft, und das Zwischenelement (56) einen Gabelkopf (57) umfasst, der mit einer Steigungsstange (60) verbunden ist.

10. Rotor nach einem der Ansprüche 8 bis 9, **dadurch gekennzeichnet, dass** der Beschlag (50) eine untere Anschlagferse (70) gegenüber einem unteren Anschlagring (80) trägt, um eine Schlagbewegung der Auftriebsbaugruppe (15) in einer Richtung (100) zu begrenzen.

11. Rotor nach einem der Ansprüche 1 bis 10, **dadurch gekennzeichnet, dass** die erste Achse (AX1) auf der Vorderkantenseite (BA) der Auftriebsbaugruppe (15) angeordnet ist und die zweite Achse (AX2) auf der Hinterkantenseite (BF) der Auftriebsbaugruppe (15) angeordnet ist.

12. Rotor nach einem der Ansprüche 1 bis 11, **dadurch gekennzeichnet, dass** die Nabe (10) zwei Platten (11, 12) aufweist, wobei der Fuß (16) jeder Auftriebsbaugruppe (15) einen Henkel (17) aufweist, der sich teilweise zwischen den Platten (11, 12) erstreckt, wobei der Henkel (17) über ein besagtes Mobilitäts- und Rückhalteelement (20) an beiden Platten (11, 12) angelenkt ist.

13. Rotor nach Anspruch 12, **dadurch gekennzeichnet, dass** für jede Auftriebsbaugruppe ein Mobilitäts- und Rückhalteelement (20) zwischen den beiden Platten (11, 12) angeordnet ist, wobei das Mobilitäts- und Rückhalteelement (20) einen äußeren Beschlag (21), der an den beiden Platten (11, 12) befestigt ist, und einen inneren Beschlag (22), der an dem Henkel (17) befestigt ist, umfasst, wobei der innere Beschlag (22) radial zwischen der Drehachse (AXROT) und dem äußeren Beschlag (21) angeordnet ist.

14. Luftfahrzeug (1), **dadurch gekennzeichnet, dass** das Luftfahrzeug (1) einen Rotor (5) nach einem der Ansprüche 1 bis 13 aufweist.

## Claims

1. Rotor (5) intended to participate at least partially in the lift and/or propulsion of an aircraft (1), said rotor (5) comprising a hub (10) and at least three lift assemblies (15) which are jointly mobile in rotation about an axis of rotation (AXROT) of the rotor (5), each lift assembly (15) comprising a base (16) and a lift member (18) which extends spanwise from said base (16) to an end (19), the base (16) being attached to the hub (10) by a mobility and retention member (20) and being secured to the lift member (18), each mobility and retention member (20) providing a degree of freedom with respect to the hub to the associated lift assembly about at least one drag axis (AXTRA) and one pitch axis (AXPAS), each lift assembly (15) being circumferentially positioned between two adjacent lift assemblies, each lift assembly (15) being linked to said two adjacent lift assemblies respectively by a first shock absorber (301) and a second shock absorber (302), and for each lift assembly (15):
- a first plane (P1) contains said drag axis (AXTRA) and is orthogonal to said pitch axis (AXPAS) of the lift assembly (15),
- said first shock absorber (301) is hinged to said lift assembly (15) at least about a first axis (AX1) parallel to the drag axis (AXTRA) of the lift assembly (15),
- said second shock absorber (302) is hinged to said lift assembly (15) at least about a second axis (AX2) parallel to the drag axis (AXTRA) of the lift assembly (15),
**characterised in that** for each lift assembly (15), the first axis (AX1) is located in a volume (V1) between said first plane (P1) of this lift assembly and said axis of rotation (AXROT), the second axis (AX2) being positioned outside said volume (V1).

2. Rotor according to Claim 1,
**characterised in that** said first axis (AX1) and said second axis (AX2) of a lift assembly (15) are arranged on both sides of the pitch axis (AXPAS) of this lift assembly (15).

3. Rotor according to either one of Claims 1 and 2,
**characterised in that** said first axis (AX1) and said second axis (AX2) of a lift assembly (15) are respectively separated from said axis of rotation (AXROT) by a first radius (R1) and a second radius (R2), the second radius (R2) being greater than the first radius (R1).

4. Rotor according to any one of Claims 1 to 3,
**characterised in that** each shock absorber (30) extends from a first end zone (33) to a second end zone (35) along a longitudinal axis of extension (AXEXT), the first end zone (33) being hinged to a lift assembly (15) referred to as "first lift assembly" about the first axis (AX1) of this first lift assembly, the second end zone (35) being hinged to a lift assembly (15) referred to as "second lift assembly" about the second axis (AX2) of this second lift assembly, a first distance (D1) orthogonally separating said longitudinal axis of extension (AXEXT) and a drag axis (AXTRA) referred to as "first drag axis (AXTRA1)" of the first lift assembly, a second distance (D2) orthogonally separating said longitudinal axis of extension (AXEXT) and a drag axis (AXTRA) referred to as "second drag axis (AXTRA2)" of the second lift assembly, a quotient of the first distance (D1) divided by the second distance (D2) being less than or equal to 0.6.

5. Rotor according to any one of Claims 1 to 4,
**characterised in that**, for each lift assembly, the first shock absorber (301) extends along a longitudinal axis of extension (AXEXT) referred to as "first longitudinal axis of extension (AXEXT1)" and the second shock absorber (302) extends along a longitudinal axis of extension (AXEXT) referred to as "second longitudinal axis of extension (AXEXT2)", the first longitudinal axis of extension (AXEXT1) intersecting a second plane (P2) at a first point (PT1), the second longitudinal axis of extension (AXEXT2) intersecting the second plane (P2) at a second point (PT2), the second plane (P2) containing said pitch axis (AXPAS) and being orthogonal to the first plane (P1), the first point (PT1) being closer to the axis of rotation (AXROT) than the second point (PT2).

6. Rotor according to any one of Claims 1 to 5,
**characterised in that** said rotor (5) lacks a stop to limit a drag movement of the lift assemblies.

7. Rotor according to any one of Claims 1 to 6,
**characterised in that** at least one shock absorber (30) is hinged to a lift assembly (15) by a ball joint (40), said ball joint (40) comprising a ball (41) traversed by a pin (42) extending along the first axis (AX1) or the second axis (AX2).

8. Rotor according to any one of Claims 1 to 7,
**characterised in that** the base (16) comprises a handle (17) secured to a mobility and retention member (20) and a bracket (50) secured to the lift assembly (15) between said handle (17) and said end (19), said bracket (50) comprising two L-shaped plates (51, 52), each L-shaped plate (51, 52) having an orifice (55) traversed by said second axis (AX2).

9. Rotor according to Claim 8,
**characterised in that** said two plates (51, 52) enclose between them an intermediate linking member (56), said intermediate member (56) comprising at least one orifice (59) traversed by said first axis (AX1), said intermediate member (56) comprising a clevis (57) connected to a pitch connecting rod (60).

10. Rotor according to either one of Claims 8 and 9,
**characterised in that** said bracket (50) has a downstop heel (70) opposite a downstop ring (80) to limit a flapping movement of the lift assembly (15) along a direction (100).

11. Rotor according to any one of Claims 1 to 10,
**characterised in that** said first axis (AX1) is situated on the side of the leading edge (BA) of the lift assembly (15), said second axis (AX2) being situated on the side of the trailing edge (BF) of the lift assembly (15).

12. Rotor according to any one of Claims 1 to 11,
**characterised in that** said hub (10) comprises two shelves (11, 12), said base (16) of each lift assembly (15) comprising a handle (17) extending partially between said shelves (11, 12), said handle (17) being hinged to the two shelves (11, 12) by a said mobility and retention member (20).

13. Rotor according to Claim 12,
**characterised in that** for each lift assembly, a mobility and retention member (20) is arranged between the two shelves (11, 12), the mobility and retention member (20) comprising an external frame (21) secured to the two shelves (11, 12) and an internal frame (22) secured to said handle (17), said internal frame (22) being radially arranged between said axis of rotation (AXROT) and said external frame (21).

14. Aircraft (1),
**characterised in that** said aircraft (1) comprises a rotor (5) according to any one of Claims 1 to 13.
